# EUROPEAN PATENT SPECIFICATION

(11) **EP 3 217 779 B1**
(45) Date of publication and mention of the grant of the patent: **08.09.2021**
(21) Application number: 14905876.0
(22) Date of filing: 14.11.2014
(51) Int. Cl.: A01D 34/00

(54) **HYBRID AC/DC LAWN MOWER WITH AC/DC SWITCHING SYSTEM**
HYBRIDER WECHSELSTROM/GLEICHSTROM-RASENMÄHER MIT WECHSELSTROM/GLEICHSTROM-UMSCHALTSYSTEM
TONDEUSE À GAZON HYBRIDE CA/CC À SYSTÈME DE COMMUTATION CA/CC

(43) Date of publication of application: 20.09.2017
(73) Proprietor: Techtronic Industries Company Limited, Tsuen Wan, New Territories (HK)
(72) Inventor: YANG, James Zhaoyun, Dongguan Guangdong (CN)
(74) Representative: BRP Renaud & Partner mbB Rechtsanwälte Patentanwälte Steuerberater
(86) International application number: PCT/CN2014/091172
(87) International publication number: WO 2016/074240

(56) References cited:
- CN-A- 101 541 578
- CN-A- 101 541 578
- CN-A- 101 557 122
- CN-A- 101 557 122
- CN-A- 101 817 106
- CN-A- 101 817 106
- CN-A- 102 611 189
- CN-A- 102 611 189
- US-B1- 7 610 975
- US-B1- 7 610 975
- None

## Description

### FIELD OF THE INVENTION

The present invention is related to a hybrid lawn mower, and more specifically to a hybrid AC/DC lawn mower,

### BACKGROUND

Hybrid lawn mowers as known in the art typically relate to electric/gas hybrid lawn mowers. Typically in the past, electric lawn mowers possess either an AC or a DC circuit, but not both. Obviously, those lawn mowers containing batteries typically contain a DC circuit so that they may run directly off of the battery. However, a new type of hybrid AC/DC lawn mower is becoming popular as they allow a user the flexibility to use AC power when the battery power is used up. Such hybrid AC/DC lawn mowers typically contain a DC motor connected to a DC circuit and a converter, such as a rectifier, to convert AC current into DC current. However, the use of a rectifier may generate significant heat and therefore waste energy. In addition, the life of an electric motor for a mower may be relatively short due to the hard and stressed usage encountered during mowing. In addition, an AC circuit and a Dc circuit, when present in a single system, could potentially be subject to human or other error and may be a safety hazard if the system short-circuits. For example, if the DC circuit and the AC circuit are engaged at the same time, the feedback could destroy one or more of the circuit paths, as well as the motor, electronics, etc.

In certain hybrid AC/DC lawn mowers, the DC battery should be, or may need to be, taken out of the mower or disconnected therefrom when AC power is used. For a heavy battery, this can be quite troublesome especially when the battery is used up during the middle of mowing.

It has now been found that the need exists for a lawn mower having a true hybrid AC/DC system which does not need a separate rectifier prior to the motor.

It has also now been found that a switching system may reduce the chance of errors and improve safety in a system having both an AC and a DC circuit.

Accordingly, there remains a need for a lawn mower having an electric lawn mower having a switching system which reduces the chance of errors. There also remains the need for an electric lawn mower having a dual commutator hybrid motor. There is also need for a mower having a more durable motor than common existing mowers. There also remains the need for a dual AC/DC mower which does not require the battery to be taken out when running on AC power. Finally, there remains the need for a mower having both an AC circuit and a DC circuit which is safe from short circuits and other electrical damage.

According to its abstract, CN-A-101541578 describes a device including a housing configured with a working element. The device also includes a motor configured for urging motion of the working element. The device also includes a power control module which may be electrically connected with at least one of the motor, a first power source configuration and a second power source configuration. Electric current is provided to the motor by the first and/or the second power source configurations. The first power source configuration may be electrically connected to a battery assembly having a DC power output. The second power source configuration may be electrically connected to a power inverter which may receive AC power and output DC power to the second power source configuration.; The motor may be one of a permanent magnet DC (PMDC) motor, a universal motor and an induction motor, the motor receiving power via the power control module from at least one of the first power source configuration and the second power source configuration.

According to its abstract, CN-A-101817106 describes a battery-operated, hand-held work device, concretely to a portable hand-held motor chain saw. The motor chain saw has a device housing (9) which is provided with an electric drive motor (8) and an output device (10) for a working tool. Additional, a battery pack (15) is arranged in the device housing (9), wherein the device housing (9) has handles (4, 6) for operating the working machine (1). According to the invention, the battery pack (15) is substantially held in a holding groove (16) of the device housing (9), wherein the device housing (9) has a housing volume (19) and the holding groove (16) has a holding volume (17) in the device housing (9). A ratio of the housing volume to the compartment volume is approximately 1.5 to maximally approximately 5.

### SUMMARY OF THE INVENTION

The present invention relates to a hybrid AC/DC lawn mower having a battery receptacle with a cavity for receiving a battery, a DC keyhole and a DC key, an AC power plug for connecting to an AC power grid, an AC keyhole and an AC key, and a motor. When the battery is received within the cavity, then the battery is operatively-connected to a DC circuit. When the DC key fits into the DC keyhole, then it completes the DC circuit. The AC power plug is connected to an AC circuit, and when the AC key fits into the AC keyhole, it completes the AC circuit. The motor is operatively-connected to the AC circuit and also the DC circuit.

Without intending to be limited by theory, it is believed that the invention herein may possess one or more advantages such as a more robust switching system which is less prone to user error, electrical short-circuiting, etc. The lawn mower may also have a motor which is more durable than other mower motors, and which is more flexible. The lawn mower may also be more convenient, and safer to use and maintain.

### BRIEF DESCRIPTION OF THE DRAWINGS

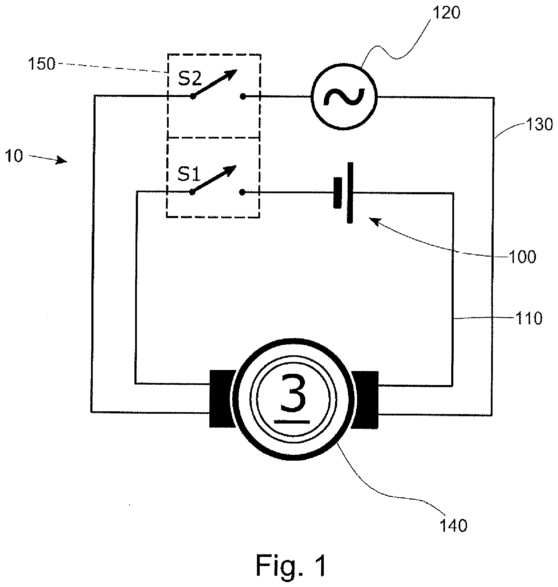

Fig. 1 shows a basic circuit diagram of an embodiment of the present invention.

The figure herein is for illustrative purposes only and is not necessarily drawn to scale.

### DESCRIPTION OF THE PREFERRED EMBODIMENTS

Unless otherwise specifically provided, all tests herein are conducted at standard conditions which include a room and testing temperature of 25 °C, sea level (1 atm.) pressure, and pH 7, and all measurements are made in metric units. Furthermore, all percentages, ratios, etc, herein are by weight, unless specifically indicated otherwise.

An embodiment of the present invention relates to a hybrid AC/DC lawn mower having a battery receptacle, a DC keyhole and a DC key, an AC power plug, an AC keyhole and an AC key and a motor. The battery receptacle has a cavity for receiving a battery and when the battery is received within the cavity, then the battery is operatively-connected to a DC circuit. The DC key fits into the DC keyhole to complete the DC circuit, while the AC key fits into the AC keyhole to complete the AC circuit. The AC power plug is for connecting to an AC power grid and the AC power plug is also connected to the AC circuit. The motor is operatively-connected to both the AC circuit and the motor is operatively connected to the DC circuit. Thus, the AC keyhole and the DC keyhole together make up an AC/DC switching system.

In an embodiment herein, the AC keyhole is physically-separated from the DC keyhole so as to further prevent short-circuiting and/or inadvertent damage to the AC circuit and the DC circuit. Without intending to be limited by theory, it is believed that such a physical separation is more robust than an electrical circuit or shutout which separates the AC and DC circuits. As a mower will typically be used under stressed physical and environmental conditions such a physically-separated AC keyhole and DC keyhole may be especially preferred in some instances.

As noted, hybrid AC/DC lawn mowers are known in the art. In an embodiment here, the AC key is the same as the DC key. Without intending to be limited by theory, it is believed that such a feature may help to prevent the user from engaging both the AC circuit and the DC circuit at the same time, so as to reduce the chances of damage to the lawn mower. This is especially be true when the AC keyhole is separate from the DC keyhole.

The lawn mower herein contains a battery receptacle which is typically formed integrally with the chassis. However, the battery receptacle may also be formed separately from the chassis and then later attached or fixed thereto. The battery receptacle may contain, for example, a removable and/or movable cover to prevent grass or other debris from fouling the battery receptacle. The battery receptacle further contains a cavity for receiving a battery or a plurality of batteries. Typically, at least one battery would be in each cavity. In an embodiment herein, the battery receptacle contains from about 1 to about 10 cavities, or from about 1 to about 6 cavities, or from about 1 to about 3 cavities, or about 1 cavity, or about 2 cavities. Without intending to be limited by theory, it is believed that a single cavity may sometimes be desirable as it may allow more convenient or easier battery replacement. Alternatively, in an embodiment herein, the battery receptacle may contain multiple cavities which may allow, for example, easier battery placement, better weight distribution, better lawn mower balance, improved lawn mower manoeuvrability, etc. if a plurality of cavities is present, then these cavities may be either grouped together, or separated as desired by the designer. Without intending to be limited by theory, it is believed that as batteries can be quite dense and heavy, separated cavities evenly distributed across the lawn mower may improve one or more of the weight distribution, lawn mower balance, lawn mower manoeuvrability, etc.

With multiple batteries, the cavity may be a single cavity for receiving a plurality of batteries, or may be sub-divided into a plurality of cavities each for receiving one or more batteries. In an embodiment herein the number of cavities equals the number of batteries. In an embodiment herein the cavity is divided into a plurality of step-like cavities. In an embodiment herein the cavity is slanted at an angle of from about 15° to about 75°; or from about 20° to about 60°, or from about 25° to about 55° from the horizontal. Without intending to be limited by theory, it is believed that such an angle serves a variety of purposes, such as allowing easier placement of the batteries as they may slide into place down the slope formed by the slanted side of the cavity. Such a benefit may be especially useful as batteries can be quite dense and heavy, and the area where they are replaced may be slick and/or slippery.

In an embodiment herein, the cavity, or the plurality of cavities, receives the batteries in a staggered manner. In an embodiment herein, a plurality of cavities receive the batteries in a staggered manner and the cavities are both parallel and slanted at an angle of from about 15° to about 75°; or from about 20° to about 60°, or from about 25° to about 55° from the horizontal. Without intending to be limited by theory, it is believed that such an arrangement allows the electric lawn mower to receive multiple batteries in a space-efficient manner which reduces the overall height of the lawn mower, especially as compared to a vertical battery arrangement, or a horizontal arrangement where the batteries are stacked one-upon-the-other.

In an embodiment herein the plurality of batteries is from about 2 batteries to about 10 batteries, or from about 2 to about 4 batteries, or about 2 to about 3 batteries, or about 2 batteries. Without intending to be limited by theory, it is believed that too many batteries becomes too much of a hassle for the user to keep track of, recharge, etc. It is further believed that too few batteries, or a single battery becomes too heavy, unwieldy, and/or may be too slow to recharge. Alternatively, it is also believed that a single large voltage battery can run afoul of certain safety regulations in various countries, and accordingly a plurality of lower voltage batteries connected by the DC circuit in series is sometimes preferred. Thus in an embodiment herein, the DC circuit connects a plurality of batteries in series. Such a design increases total voltage.

In an embodiment herein, the DC circuit connects a plurality of batteries in parallel. Such a design is useful when, for example, greater overall battery capacity (i.e., battery life) is desired.

In an embodiment herein each of the plurality of batteries is of the same voltage and shape. In an embodiment herein, one or more batteries may have a different shape from another battery. It is believed that such a design allows the batteries to be easily interchanged in the cavity and/or cavities so as to reduce complexity. In an embodiment herein, each battery has a voltage of from about 6 to about 56 volts, or from about 9 volts to about 36 volts, or from about 16 volts to about 24 volts, or about 18 volts.

The motor herein may be an AC motor, a DC motor, or a dual commutator hybrid motor (also known as a hybrid AC/DC commutator motor). If an embodiment herein, the motor is a DC motor, and a rectifier is typically operatively-connected in the AC circuit to convert the AC current to DC current. This rectifier may be a half wave rectifier or a full wane rectifier, as desired. In an embodiment herein, the motor is an AC motor and an inverter is typically provided operatively-connected to the DC circuit to convert the DC current to AC current. In an embodiment herein, a dual commutator hybrid motor is used herein. Without intending to be limited by theory, it is believed that a dual commutator hybrid motor allows a more simple circuit as neither a rectifier nor an inverter is needed, which further reduces manufacturing and supply-chain complexity. In addition, such a motor may provide a longer lifespan than a regular motor, as it often has double the number of brushes. All such motors are well-known in the art and available from multiple suppliers worldwide.

In an embodiment herein, the hybrid AC/DC lawn mower contains a cover which physically allows either the AC key to fit into the keyhole or the DC key to fit into the keyhole at any given time. In such a case, the AC keyhole and the DC keyhole are different keyholes and when the cover allows the AC key to fit into the AC keyhole the cover prevents the DC key from fitting into the DC keyhole. Similarly, when the cover allows the DC key to fit into the DC keyhole, the cover prevents the AC key from fitting into the AC keyhole. Typically the cover would prevent the AC key from fitting into the AC keyhole and the DC key from fitting into the DC keyhole by physically blocking those respective keyholes. In an embodiment herein, the cover is selected from the group consisting of a flip cover, a sliding cover, a rotating cover, and a combination thereof, or a flip cover, a sliding cover, and a combination thereof, or a sliding cover. In an embodiment herein, the AC keyhole is adjacent to the DC keyhole. In an embodiment herein, the cover is designed so that the cover may either block access to the AC keyhole or the DC keyhole, but not both at the same time.

In an embodiment herein, the hybrid AC/DC lawn mower contains a sensor device containing a DC sensor in the DC circuit and an AC sensor in the AC circuit. When the sensor device detects that the DC circuit is complete and the AC circuit is complete at the same time then the sensor device deactivates a circuit selected from the group consisting of the AC circuit, the DC circuit, and a combination thereof. Without intending to be limited by theory, it is believed that in cases where a cover is not present, such a sensor device can prevent short circuits, damage, etc. Even when a cover is present which should prevent a user from activating both the AC circuit and the DC circuit at the same time, for safety's sake such a sensor device may still be desirable so as to further prevent short circuits, damage, etc.

In an embodiment herein the AC power plug is located in a location selected from a handle, a power cord, on the mower's body, and a combination thereof; or a handle, a power cord, and a combination thereof. In an embodiment herein, the plug is located on the mower body, and then the connected power cord (e.g., specific or generalized power cord, extension cord, etc.) may hang on the mower's handle. Without intending to be limited by theory, it is believed that when the plug location is the handle, or when the power cord hangs from the handle, then the attached power cord's proximity to the user reduces the chance that the lawn mower will inadvertently roll over the power cord and damage or cut it. In such an embodiment, a power cord may be included with the hybrid AC/DC lawn mower, or the user may supply their own power cord, such as an extension cord. In an embodiment herein, the power plug is located at the end of a power cord, and especially a power cord which is attached to the hybrid AC/DC lawn mower and operatively-connected to the AC circuit, In an embodiment herein, the plug is located on the handle and an extension cord may be plugged onto the plug. In such a case, the extension cord may be either an off-the-shelf extension cord, or an extension cord specifically-designed for use with the mower herein.

Fig. 1 shows a basic circuit diagram, 10, of an embodiment of the present invention where a battery, 100, is operatively-connected to a DC circuit, 110. An AC plug (not shown) provides AC power, 120, from an AC power grid (not shown). A DC keyhole is embodied by switch, S1, while an AC keyhole is embodied by switch, S2. The AC circuit, 130, is operatively-connected to the AC power, 120, and the AC keyhole, S2.

A motor, in this case a dual commutator hybrid mower, 140, is operatively-connected to the AC circuit, 130, and also operatively-connected to the DC-circuit, 110. A cover, 150, is schematically-illustrated in the circuit diagram to indicate that either switch, S1, or switch, S2, is allowed to close, but not both at the same time, thereby completing either the DC circuit, 110, or the AC circuit, 130, respectively.

It should be understood that the above only illustrates and describes examples whereby the present invention may be carried out, and that modifications and/or alterations may be made thereto without departing from the scope of the appended claims.

It should also be understood that certain features of the invention, which are, for clarity, described in the context of separate embodiments, may also be provided in combination in a single embodiment, Conversely, various features of the invention which are, for brevity, described in the context of a single embodiment, may also be provided or separately or in any suitable subcombination within the scope of the appended claims.

## Claims

1. A hybrid AC/DC lawn mower comprising:
a DC circuit (110) and an AC circuit (130);
a battery receptacle comprising at least one cavity for receiving a battery (100), wherein when the battery (100) is received within the cavity and the battery (100) is operatively-connected to the DC circuit (110);
a DC keyhole (S1) and a DC key, wherein the DC key is configured to fit into the DC keyhole (S1) to complete the DC circuit (110);
an AC power plug for connecting to an AC power grid (120), wherein the AC power plug is connected to the AC circuit (130);
an AC keyhole (S2) and an AC key, wherein the AC key is configured to fit into the AC keyhole (S2) to complete the AC circuit (130); and
a motor (140) operatively-connected to the AC circuit (130) and the DC circuit (110);
wherein the AC key and the DC key are the same key.

2. The hybrid AC/DC lawn mower according to claim 1, wherein the motor (140) is a dual commutator hybrid motor.

3. The hybrid AC/DC lawn mower according to claim 1 or 2, further comprising a cover, wherein the cover physically allows either the AC key to fit into the AC keyhole (S2) or the DC key to fit into the DC keyhole (S1) at any given time, wherein when the cover allows the AC key to fit into the AC keyhole (S2) then the cover prevents the DC key from fitting into the DC keyhole (S1), and wherein when the cover allows the DC key to fit into the DC keyhole (S1) then the cover prevents the AC key from fitting into the AC keyhole (S2).

4. The hybrid AC/DC lawn mower according to one of claims 1 to 3, further comprising a sensor device comprising a DC sensor in the DC circuit (110) and an AC sensor in the AC circuit (130), and wherein when the sensor device detects that the DC circuit (110) is completed and the AC circuit (130) is completed, the sensor device deactivates one or both of the AC circuit (130) and the DC circuit (110).

5. The hybrid AC/DC lawn mower according to one of claims 1 to 4, wherein the AC keyhole (S2) is adjacent to the DC keyhole (S1).

6. The hybrid AC/DC lawn mower according to one of claims 1 to 5, wherein the AC power plug is located on at least one of a handle and a power cord of the hybrid AC/DC lawn mower.

7. The hybrid AC/DC lawn mower according to claim 3, wherein the cover is slidable to allow either the AC key to fit into the AC keyhole (S2) or the DC key to fit into the DC keyhole (S1).

8. The hybrid AC/DC lawn mower according to one of claims 1 to 7, wherein the battery (100) has a voltage of from about 12 volts to about 54 volts.

9. A hybrid AC/DC lawn mower comprising:
a DC circuit (110) and an AC circuit (130);
a battery receptacle comprising from about 2 to about 4 cavities, each cavity for receiving a battery (100), wherein when the battery (100) is received within the cavity the battery (100) is operatively-connected to the DC circuit (110) a battery (100) in each cavity, each battery (100) having a voltage of from about 12 to about 54 volts;
a DC keyhole (S1) and a DC key, wherein the DC key is configured to fit into the DC keyhole (S1) to complete the DC circuit (110);
an AC power plug for connecting to an AC power grid (120), wherein the AC power plug is connected to the AC circuit (130);
an AC keyhole (S2) and an AC key, wherein the AC key is configured to fit into the AC keyhole (S2) to complete the AC circuit (130);
a coverarranged to physically allows either the AC key to fit into the AC keyhole (S2) or the DC key to fit into the DC keyhole (S1) at any given time, such that when the cover allows the AC key to fit into the AC keyhole (S2) the cover prevents the DC key from fitting into the DC keyhole (S1), when the cover allows the DC key to fit into the DC keyhole (S1) the cover prevents the AC key from fitting into the AC keyhole (S2), and wherein the cover slides to allow either the AC key to fit into the AC keyhole (S2) or the DC key to fit into the DC keyhole (S1); and
a motor (140) operatively-connected to the AC circuit (130) and the DC circuit (110);
wherein the AC key and the DC key are the same key.

## Patentansprüche

1. Hybrider Wechselstrom/Gleichstrom-Rasenmäher, umfassend:
einen Gleichstromkreis (110) und einen Wechselstromkreis (130);
eine Batterieaufnahme, die mindestens einen Hohlraum zum Aufnehmen einer Batterie (100) umfasst, wobei, wenn die Batterie (100) in dem Hohlraum aufgenommen ist, die Batterie (100) betriebsfähig mit dem Gleichstromkreis (110) verbunden ist;
ein Gleichstromschlüsselloch (S1) und einen Gleichstromschlüssel, wobei der Gleichstromschlüssel konfiguriert ist, um in das Gleichstromschlüsselloch (S1) zu passen, um den Gleichstromkreis (110) zu schließen;
einen Wechselstromstecker zum Verbinden mit einem Wechselstromnetz (120), wobei der Wechselstromstecker mit dem Wechselstromkreis (130) verbunden ist;
ein Wechselstromschlüsselloch (S2) und einen Wechselstromschlüssel, wobei der Wechselstromschlüssel konfiguriert ist, um in das Wechselstromschlüsselloch (S2) zu passen, um den Wechselstromkreis (130) zu schließen; und
einen Motor (140), der betriebsfähig mit dem Wechselstromkreis (130) und dem Gleichstromkreis (110) verbunden ist;
wobei der Wechselstromschlüssel und der Gleichstromschlüssel derselbe Schlüssel sind.

2. Hybrider Wechselstrom/Gleichstrom-Rasenmäher nach Anspruch 1, wobei der Motor (140) ein Doppelkommutator-Hybridmotor ist.

3. Hybrider Wechselstrom/Gleichstrom-Rasenmäher nach Anspruch 1 oder 2, ferner umfassend eine Abdeckung, wobei zu einem beliebigen Zeitpunkt die Abdeckung physisch entweder dem Wechselstromschlüssel ermöglicht, in das Wechselstromschlüsselloch (S2) zu passen, oder dem Gleichstromschlüssel ermöglicht, in das Gleichstromschlüsselloch (S1) zu passen, wobei, wenn die Abdeckung ermöglicht, dass der Wechselstromschlüssel in das Wechselstromschlüsselloch (S2) passt, die Abdeckung dann verhindert, dass der Gleichstromschlüssel in das Gleichstromschlüsselloch (S1) passt, und wobei, wenn die Abdeckung ermöglicht, dass der Gleichstromschlüssel in das Gleichstromschlüsselloch (S1) passt, die Abdeckung dann verhindert, dass der Wechselstromschlüssel in das Wechselstromschlüsselloch (S2) passt.

4. Hybrider Wechselstrom/Gleichstrom-Rasenmäher nach einem der Ansprüche 1 bis 3, ferner umfassend eine Sensorvorrichtung, die einen Gleichstromsensor im Gleichstromkreis (110) und einen Wechselstromsensor im Wechselstromkreis (130) umfasst und wobei, wenn die Sensorvorrichtung erfasst, dass der Gleichstromkreis (110) geschlossen ist und der Wechselstromkreis (130) geschlossen ist, die Sensorvorrichtung den Wechselstromkreis (130) oder den Gleichstromkreis (110) oder beide deaktiviert.

5. Hybrider Wechselstrom/Gleichstrom-Rasenmäher nach einem der Ansprüche 1 bis 4, wobei das Wechselstromschlüsselloch (S2) an das Gleichstromschlüsselloch (S1) angrenzt.

6. Hybrider Wechselstrom/Gleichstrom-Rasenmäher nach einem der Ansprüche 1 bis 5, wobei sich der Wechselstromstecker an mindestens einem aus einem Griff oder einem Stromkabel des hybriden Wechselstrom/Gleichstrom-Rasenmähers befindet.

7. Hybrider Wechselstrom/Gleichstrom-Rasenmäher nach Anspruch 3, wobei die Abdeckung verschiebbar ist, um zu ermöglichen, dass entweder der Wechselstromschlüssel in das Wechselstromschlüsselloch (S2) passt oder der Gleichstromschlüssel in das Gleichstromschlüsselloch (S1) passt.

8. Hybrider Wechselstrom/Gleichstrom-Rasenmäher nach einem der Ansprüche 1 bis 7, wobei die Batterie (100) eine Spannung von etwa 12 Volt bis etwa 54 Volt aufweist.

9. Hybrider Wechselstrom/Gleichstrom-Rasenmäher, umfassend:
einen Gleichstromkreis (110) und einen Wechselstromkreis (130);
eine Batterieaufnahme, umfassend von etwa 2 bis etwa 4 Hohlräumen, wobei jeder Hohlraum zum Aufnehmen einer Batterie (100) dient, wobei, wenn die Batterie (100) in dem Hohlraum aufgenommen ist, die Batterie (100) betriebsfähig mit dem Gleichstromkreis (110) verbunden ist
eine Batterie (100) in jedem Hohlraum, wobei jede Batterie (100) eine Spannung von etwa 12 bis etwa 54 Volt aufweist;
ein Gleichstromschlüsselloch (S1) und einen Gleichstromschlüssel, wobei der Gleichstromschlüssel konfiguriert ist, um in das Gleichstromschlüsselloch (S1) zu passen, um den Gleichstromkreis (110) zu schließen;
einen Wechselstromstecker zum Verbinden mit einem Wechselstromnetz (120), wobei der Wechselstromstecker mit dem Wechselstromkreis (130) verbunden ist;
ein Wechselstromschlüsselloch (S2) und ein Wechselstromschlüssel, wobei der Wechselstromschlüssel konfiguriert ist, um in das Wechselstromschlüsselloch (S2) zu passen, um den Wechselstromkreis (130) zu schließen;
eine Abdeckung, die angeordnet ist, um zu einem beliebigen Zeitpunkt physisch entweder dem Wechselstromschlüssel zu ermöglichen, in das Wechselstromschlüsselloch (S2) zu passen, oder dem Gleichstromschlüssel zu ermöglichen, in das Gleichstromschlüsselloch (S1) zu passen, so dass, wenn die Abdeckung ermöglicht, dass der Wechselstromschlüssel in das Wechselstromschlüsselloch (S2) passt, die Abdeckung verhindert, dass der Gleichstromschlüssel in das Gleichstromschlüsselloch (S1) passt, und wenn die Abdeckung ermöglicht, dass der Gleichstromschlüssel in das Gleichstromschlüsselloch (S1) passt, die Abdeckung verhindert, dass der Wechselstromschlüssel in das Wechselstromschlüsselloch (S2) passt, und wobei die Abdeckung gleitet, um zu ermöglichen, dass entweder der Wechselstromschlüssel in das Wechselstromschlüsselloch (S2) passt oder der Gleichstromschlüssel in das Gleichstromschlüsselloch (S1) passt; und
einen Motor (140), der betriebsfähig mit dem Wechselstromkreis (130) und dem Gleichstromkreis (110) verbunden ist;
wobei der Wechselstromschlüssel und der Gleichstromschlüssel derselbe Schlüssel sind.

## Revendications

1. Tondeuse à gazon hybride CA/CC comprenant :
un circuit CC (110) et un circuit CA (130) ;
un réceptacle de batterie comprenant au moins une cavité pour recevoir une batterie (100), dans laquelle lorsque la batterie (100) est reçue à l'intérieur de la cavité et que la batterie (100) est raccordée de manière opérationnelle au circuit CC (110) ;
un trou de serrure CC (S1) et une clé CC, dans laquelle la clé CC est configurée pour entrer dans le trou de serrure CC (S1) pour compléter le circuit CC (110) ;
une fiche d'alimentation électrique CA destinée à être raccordée à un réseau électrique CA (120), dans laquelle la fiche d'alimentation électrique CA est raccordée au circuit CA (130) ;
un trou de serrure CA (S2) et une clé CA, dans laquelle la clé CA est configurée pour entrer dans le trou de serrure CA (S2) pour compléter le circuit CA (130) ; et
un moteur (140) raccordé de manière opérationnelle au circuit CA (130) et au circuit CC (110) ;
dans laquelle la clé CA et la clé CC sont la même clé.

2. Tondeuse à gazon hybride CA/CC selon la revendication 1, dans laquelle le moteur (140) est un moteur hybride à double commutateur.

3. Tondeuse à gazon hybride CA/CC selon la revendication 1 ou 2, comprenant en outre un couvercle, dans laquelle le couvercle permet physiquement soit à la clé CA d'entrer dans le trou de serrure CA (S2) soit à la clé CC d'entrer dans le trou de serrure CC (S1) à tout moment, dans laquelle lorsque le couvercle permet à la clé CA d'entrer dans le trou de serrure CA (S2) le couvercle empêche alors la clé CC d'entrer dans le trou de serrure CC (S1), et dans laquelle lorsque le couvercle permet à la clé CC d'entrer dans le trou de serrure CC (S1) le couvercle empêche alors la clé CA d'entrer dans le trou de serrure CA (S2).

4. Tondeuse à gazon hybride CA/CC selon l'une des revendications 1 à 3, comprenant en outre un dispositif capteur comprenant un capteur CC dans le circuit CC (110) et un capteur CA dans le circuit CA (130), et dans laquelle lorsque le dispositif capteur détecte que le circuit CC (110) est complété et que le circuit CA (130) est complété, le dispositif capteur désactive l'un ou les deux parmi le circuit CA (130) et le circuit CC (110).

5. Tondeuse à gazon hybride CA/CC selon l'une des revendications 1 à 4, dans laquelle le trou de serrure CA (S2) est adjacent au trou de serrure CC (S1).

6. Tondeuse à gazon hybride CA/CC selon l'une des revendications 1 à 5, dans laquelle la fiche d'alimentation électrique CA est située sur au moins l'un parmi une poignée et un cordon d'alimentation de la tondeuse à gazon hybride CA/CC.

7. Tondeuse à gazon hybride CA/CC selon la revendication 3, dans laquelle le couvercle peut coulisser pour permettre soit à la clé CA d'entrer dans le trou de serrure CA (S2) soit à la clé CC d'entrer dans le trou de serrure CC (S1).

8. Tondeuse à gazon hybride CA/CC selon l'une des revendications 1 à 7, dans laquelle la batterie (100) a une tension d'environ 12 volts à environ 54 volts.

9. Tondeuse à gazon hybride CA/CC comprenant :
un circuit CC (110) et un circuit CA (130) ;
un réceptacle de batterie comprenant d'environ 2 à environ 4 cavités, chaque cavité étant destinée à recevoir une batterie (100), dans laquelle lorsque la batterie (100) est reçue à l'intérieur de la cavité la batterie (100) est raccordée de manière opérationnelle au circuit CC (110)
une batterie (100) dans chaque cavité, chaque batterie (100) ayant une tension d'environ 12 à environ 54 volts ;
un trou de serrure CC (S1) et une clé CC, dans laquelle la clé CC est configurée pour entrer dans le trou de serrure CC (S1) pour compléter le circuit CC (110) ;
une fiche d'alimentation électrique CA destinée à être raccordée à un réseau électrique CA (120), dans laquelle la fiche d'alimentation électrique CA est raccordée au circuit CA (130) ;
un trou de serrure CA (S2) et une clé CA, dans laquelle la clé CA est configurée pour entrer dans le trou de serrure CA (S2) pour compléter le circuit CA (130) ;
un couvercle agencé pour permettre physiquement soit à la clé CA d'entrer dans le trou de serrure CA (S2) soit à la clé CC d'entrer dans le trou de serrure CC (S1) à tout moment, de telle sorte que lorsque le couvercle permet à la clé CA d'entrer dans le trou de serrure CA (S2) le couvercle empêche la clé CC d'entrer dans le trou de serrure CC (S1), lorsque le couvercle permet à la clé CC d'entrer dans le trou de serrure CC (S1) le couvercle empêche la clé CA d'entrer dans le trou de serrure CA (S2), et dans laquelle le couvercle coulisse pour permettre soit à la clé CA d'entrer dans le trou de serrure CA (S2) soit à la clé CC d'entrer dans le trou de serrure CC (S1) ; et
un moteur (140) raccordé de manière opérationnelle au circuit CA (130) et au circuit CC (110) ;
dans laquelle la clé CA et la clé CC sont la même clé.
